# EUROPEAN PATENT SPECIFICATION

(11) **EP 2 512 783 B1**
(45) Date of publication and mention of the grant of the patent: **04.01.2017**
(21) Application number: 10779651.8
(22) Date of filing: 12.11.2010
(51) Int. Cl.: B29C 70/44, B29C 73/00, B29C 35/02

(54) **DOUBLE VACUUM CURE PROCESSING OF COMPOSITE PARTS**
DOPPELVAKUUM-AUSHÄRTUNGSVERARBEITUNG VON VERBUNDSTOFFTEILEN
PROCÉDÉ DE TRAITEMENT SOUS VIDE DOUBLE DE PIÈCES COMPOSITES

(30) Priority: 18.12.2009 US 641897
(43) Date of publication of application: 24.10.2012
(73) Proprietor: The Boeing Company, Chicago, IL 60606-1596 (US)
(72) Inventor: ANDERSON, Michael R., Renton, Washington 98055 (US); DEPASE, Edoardo P., Seattle, Washington 98109 (US)
(74) Representative: Howson, Richard G.B.
(86) International application number: PCT/US2010/056605
(87) International publication number: WO 2011/075252

(56) References cited:
- WO-A2-2008/045485
- US-A1- 2005 253 309
- US-B1- 6 482 497

## Description

### TECHNICAL FIELD

This disclosure generally relates to equipment and methods for making composite parts, and deals more particularly with double vacuum cure processing of composites.

### BACKGROUND

Autoclaves are widely used to cure composite parts having higher performance specifications requiring tight dimensional tolerances and low porosity. Heating the composite within an autoclave results in a chemical reaction that both cures the resin and produces volatiles inside the composite that are driven out by pressure applied to the atmosphere within the autoclave. Similarly, pressclaves may be used to cure composites by applying heat and pressure to a heated part through an inflatable bladder. Autoclaves, pressclaves and similar equipment may be undesirable for use in some applications, however, due to their higher capital cost and the labor they require for setup and operation. Furthermore, autoclave and pressclave cure processing may be limited by the size of parts that can be processed.

Double vacuum bag (DVB) processing may also be employed to cure composite parts such as prepreg laminates. Unlike autoclave curing, DVB processing is not limited by the size of the part. The DVB process is also less capital equipment intensive than autoclave processing, and may provide tighter dimensional control and higher mechanical performance in the cured part compared to autoclave processing or single vacuum bag (SVB) processing.

Prior DVB equipment and processing methods can be relatively labor intensive and time consuming. DVB equipment comprises inner and outer vacuum bags that must be individually positioned and sealed to a tool base using hand labor. The bags must each be leak checked before processing begins. Additionally, the current DVB processing technique requires an intermediate low temperature hold step during the processing cycle in which the temperature of the part is held at a substantially constant level for a period of time as the part is ramped up to a desired cure temperature. This intermediate low temperature hold adds to the overall processing time of the part.

Accordingly, there is a need for a simplified double vacuum cure apparatus and related method for curing composite parts that both reduces labor costs and processing times.

US2005/0253309 A1 describes a double vacuum process for resin matrix composite manufacturing.

### SUMMARY

The disclosed embodiments provide apparatus and a related method for curing a prepreg laminate using double vacuum processing. The apparatus is effective in removing volatiles, and may produce parts exhibiting reduced dimensional tolerance variations and improved mechanical properties. Time and labor needed to set up equipment and cure parts may be reduced through the use of an integrated double vacuum chamber assembly comprising a flexible inner bag that is permanently attached to a substantially rigid outer shroud. Use of the apparatus may allow reduction or elimination of an intermediate low temperature hold as the temperature of the part is being increased to the cure temperature, thereby further reducing processing time. The method and apparatus may be used to produce composite parts during an original manufacturing process or to rework parts using composite patches.

According to an aspect of the invention, there is provided a method for curing a composite part, as claimed in claim 1.

The disclosed embodiments provide apparatus and a related method for double vacuum curing of composite laminates which obviate the need for autoclave processing, and may produce parts exhibiting reduced part-to-part dimensional variations and improved mechanical properties.

### BRIEF DESCRIPTION OF THE ILLUSTRATIONS

FIG. 1 is an illustration of a sectional view of apparatus for double vacuum curing of composite laminates according to one embodiment.
FIG. 2 is an illustration of a sectional view of an alternate form of the apparatus in which magnetic means are employed to attach the flexible inner bag to a tool.
FIG. 3 is an illustration of a sectional view of an embodiment of the apparatus in which the flexible inner bag and outer rigid shroud are integrated into a single assembly.
FIG. 4 is an illustration of a sectional view of an apparatus present only to assist in the understanding of the invention in which an opening is provided in the tool for improving heating of the tool.
FIG. 5 is an illustration of a further embodiment of the apparatus employing thermocouples and the use of a heating source integrated into the tool.
FIG. 6 is an illustration of another embodiment of the apparatus in which a thermal mass has been added to the tool to improve heat transfer to the part.
FIG. 7 is an illustration of a perspective view of another embodiment of the apparatus in which a heating conduit is integrated into the tool.
FIG. 8 is an illustration of a flow diagram showing the steps of a method of double vacuum curing a composite laminate.
FIG. 9 is an illustration of a graph showing the relationship between temperature and vacuum pressure over time according to one process embodiment.
FIG. 10 is an illustration of a graph similar to FIG. 9, for an alternate process embodiment which is not part of the claimed invention.
FIG. 11 is an illustration of a flow diagram of aircraft production and service methodology.
FIG. 12 is an illustration of a block diagram of an aircraft.

### DETAILED DESCRIPTION

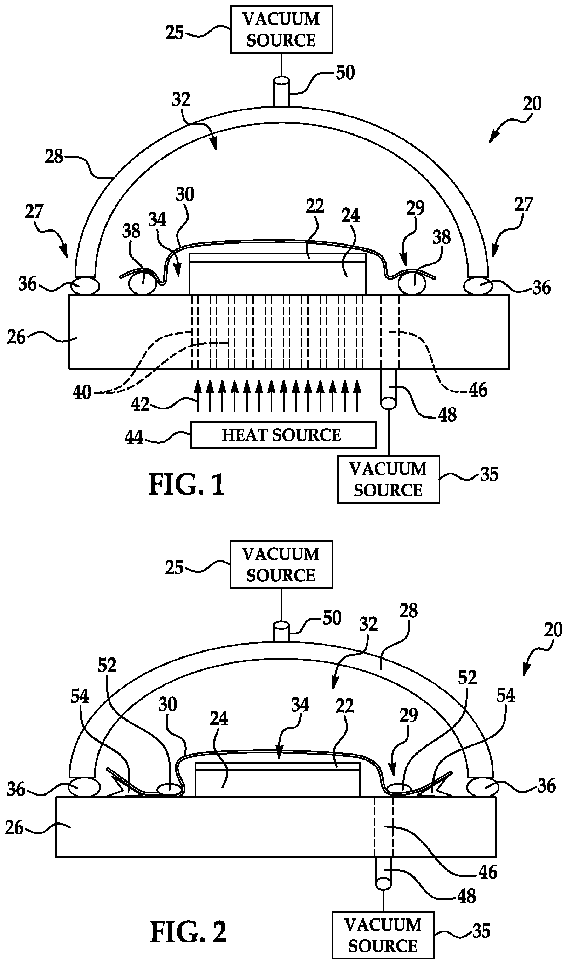

Referring first to FIG. 1, a double vacuum chamber apparatus 20 is used to perform out-of-autoclave curing of a composite part 22. As used herein, "part" and "composite part" are used in their broadest sense and include but are not limited to various forms of structures, such as, without limitation, beams, supports, panels, structural and non-structural members, elements and subassemblies, to name only a few. The part 22 may comprise a multi-ply prepreg laminate which is placed on or against a tool 24 supported on a metallic tool base 26. A substantially rigid outer shroud 28 is sealed around its outer periphery 27 to the tool base 26 by a seal 36, thereby forming a first, outer vacuum chamber 32 over the composite part 22. In one embodiment, the seal 36 may comprise a reusable elastomeric seal that is permanently affixed to the periphery 27 of the outer shroud 28. The outer shroud 28 may comprise any suitable material such as a metal or a composite that possesses sufficient rigidity to allow the shroud 28 to be substantially self-supporting and retain its shape. The shroud 28 may possess any of various shapes both in footprint and cross section, that is suitable for covering the particular part 22 to be cured. The outer shroud 28 includes a vacuum port 50 connected with a suitable vacuum source 25 which is operable to draw a desired vacuum in the outer vacuum chamber 32.

A flexible, inner vacuum bag 30 contained inside the outer shroud 28 also covers the part 22 and is sealed around its periphery 29 to the tool base 26, thereby forming a second, inner vacuum chamber 34 over the part 22. The bag 30 may comprise, for example and without limitation, a conventional one-time-use nylon bag and the seal 38 may be a conventional, non-reusable sealant. Alternatively, the bag 30 may be a reusable type made of, for example and without limitation, an elastomeric material, and the seal 38 may comprise a reusable elastomeric seal. Although not shown in FIG. 1 for purposes of clarity, additional layers of material may be placed on the part 22, beneath the flexible bag 30, including but not limited to separator films, breathers and caul plates.

The tool base 26 may include a passageway 46 therein which communicates with the inner vacuum chamber 34. The passageway 46 is coupled through a vacuum port 38 to a vacuum source 35 which is used to draw a desired level of vacuum within the inner vacuum chamber 34 during cure processing. The tool base 26 may also include one or more vent openings 40 therein to allow heat indicated by the arrows 42 from a heat source 44 to be vented directly against the tool 24. Alternatively, cure processing using the apparatus 20 may be performed within an oven (not shown) which is used to heat the composite part 22 to the required cure temperature.

FIG. 2 illustrates an alternate embodiment of the apparatus 20 in which a reusable type elastomeric inner vacuum bag 30 covers the composite part 20. The bag 30 includes a magnetic strip 52 integrated into and surrounding the periphery of the bag 30 for holding the bag 30 against the metallic tool base 26. The bag 30 further includes a reusable vacuum seal 54 permanently bonded to the bag 30 for creating a vacuum tight seal outside of the magnetic strip 52 and surrounding the part 22. Integration of the bag 30, the magnetic strip 52 and the reusable seal 54 into a single assembly allow the bag 30 to be quickly deployed over the part 22 and sealed to the tool base 26.

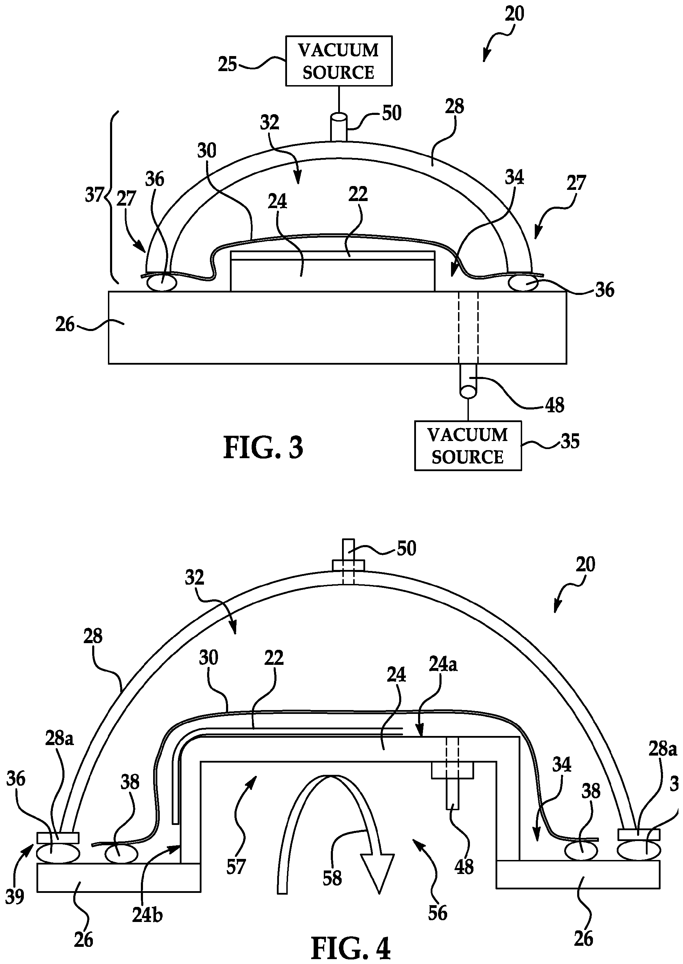

Attention is now directed to FIG. 3 which illustrates another embodiment of the apparatus 20 in which the inner, flexible bag 30 is permanently attached to the periphery 27 of the outer shroud 28 so that the outer shroud 28 and inner bag 30 form a single double vacuum chamber assembly 37 that may be easily and quickly placed on and sealed to the tool base 26, covering the part 22. The integration of the outer shroud 28, inner bag 30 and seal 36 into a single assembly 37 permits checking the outer shroud 28 and inner bag 30 for leaks before they are installed over the part 22, thus reducing processing time. In this example, a reusable seal 36 is attached to the periphery 27 of the shroud 28, with the inner bag 30 sandwiched therebetween so that the seal 36 functions to seal both the outer and inner vacuum chambers 32, 34 respectively on the tool base 26.

It should be noted here that while the various embodiments are described in connection with producing original composite parts as part of a manufacturing process, various components of the apparatus including the double vacuum chamber assembly 37, and well as the disclosed method may be employed to rework parts or structures. For example the embodiments may be employed to cure a composite patch (not shown) and remove volatiles therefrom that is used to rework a portion of a structure such as an aircraft skin (not shown), either to improve the structure or to restore the structure to original specifications. In a rework application of the embodiments, the double vacuum chamber assembly 37 may be placed on and sealed to the structure, rather than to a tool base 26 as shown in the Figures.

Attention is now directed to FIG. 4 which illustrates another embodiment of the apparatus 20 in which a tool 24 mounted on a tool base 26 includes a generally U-shaped cross section forming an opening 56 on the backside 57 of the tool 24. The opening 56 allows warm air shown by the arrow 58 from a suitable heat source (not shown) to circulate evenly around and directly contact the backside 57 of the tool 24, thereby improving the transfer of heat to the composite part 22. In this particular example, the tool 24 includes a pair of tool surfaces 24a, 24b for heating and maintaining the shape of the part 22. The outer shroud 28 is provided with a peripheral flange 28a which forms a surface 39 against which the seal 36 may conform to create a vacuum tight seal around the outer vacuum chamber 32.

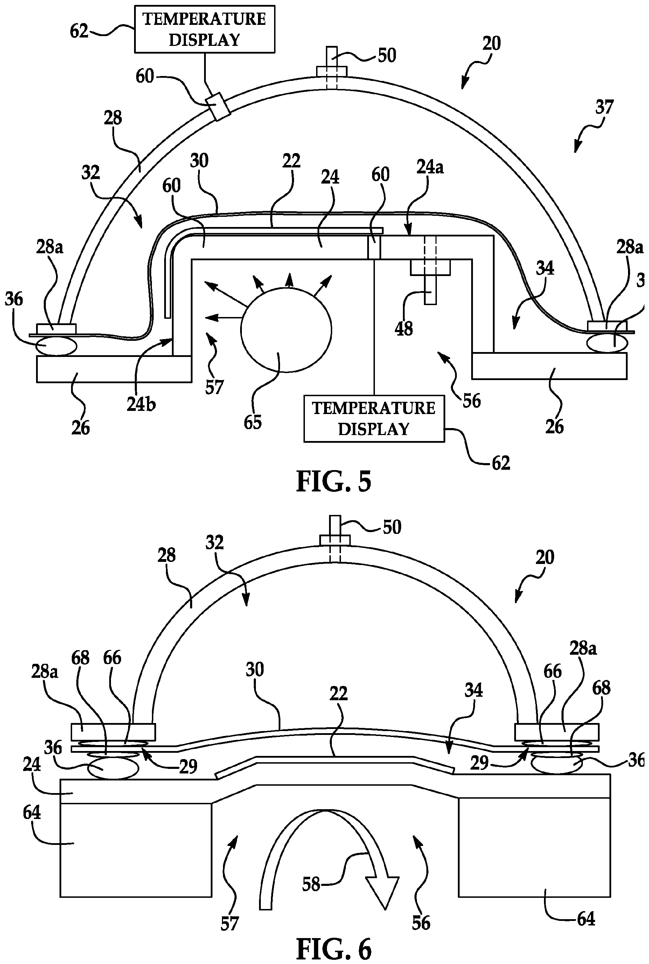

Referring now to FIG. 5, a further form of the apparatus 20 includes a substantially rigid outer shroud 28 to which the inner flexible bag 30 and the reusable seal 36 are permanently attached so that the shroud 28, bag 30 and seal 36 may be installed and removed over the part 22 as a single assembly 37. In this example, thermocouples 60 may be provided in the shroud 28 and/or in the tool 24 in order to measure the temperature of the part 22. Suitable displays 62 may be provided to display the temperature sensed by the thermocouples 60. In this embodiment, a radiant or other form of heat source 65 may be placed within the opening 56 so as to be in close proximity to and direct heat along the back side 57 of the tool 24 in order to increase the efficiency and reduce the time required for heat transfer to the part 22.

FIG. 6 illustrates still another embodiment of the apparatus 20 in which a thermal mass 64 comprising a thermally conductive material such as, without limitation, copper or aluminum, is attached to the backside 57 of the tool 24 in order to further maximize the speed and efficiency of heat transfer to the part 22, as well as to heat the part 22 more uniformly. The embodiment of the apparatus 20 shown in FIG. 6 utilizes an integrated double vacuum chamber configuration, similar to that shown in FIGS. 3 and 5. The outer periphery 29 of the bag 30 is bonded to the flange 28 on the shroud 28 by a layer of adhesive 66. The seal 36 is in turn bonded to the periphery 30 of the bag 30 by a second layer of adhesive 68.

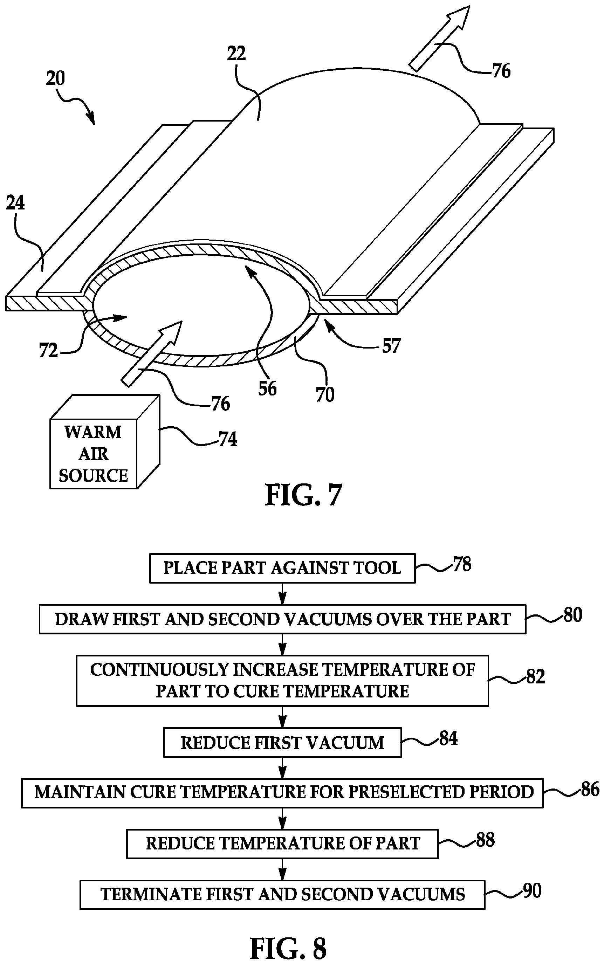

FIG. 7 illustrates an embodiment of the apparatus 20 in which an opening 56 in the backside 57 of the tool 24 is closed by a cover 70 to form a conduit 72 through the tool 24. A suitable source of warm air 74 may direct warm air through the conduit 72 as shown by the arrows 76 in order to directly warm the backside 57 of the tool 24 and thus the part 22. The outer shroud 28 and the inner bag 30 are not shown in FIG. 7 for purposes of clarity.

FIG. 8 illustrates the steps of a method for double vacuum curing of a composite part 22 which employs the apparatus 20 shown in FIGS. 1-7. Beginning at step 78, an uncured composite part 22 is placed on or against a suitable cure tool 24. As shown at 80, first and second vacuums are then drawn over the part 22 using the vacuum chambers 32, 34 respectively formed by the outer shroud 28 and the inner bag 30. At step 82, with the first and second vacuums having been drawn, the temperature of the part 22 is continuously increased through heating until the part temperature reaches a preselected cure temperature. As will be explained below, the part temperature is increased at a constant rate. As the temperature of the part 22 is being increased to the cure temperature, the first vacuum is reduced to some preselected level, as shown at step 84 so that the level of the second vacuum is greater than the level of the first vacuum. Once the part 22 reaches the cure temperature, the cure temperature is maintained, as shown at step 86 for a preselected period during which the part 22 cures. After the part 22 is cured, the temperature of the part 22 is reduced as shown at step 88, and the first and second vacuums are terminated as shown at step 90.

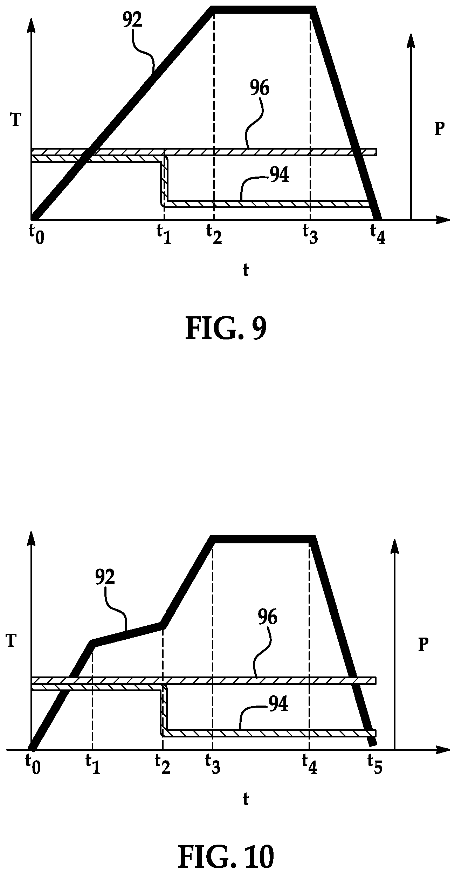

FIG. 9 illustrates vacuum pressure
and temperature profiles according to processing schedule suitable for double vacuum curing of the composite part 22. As previously noted however, the disclosed method utilizing the processing schedule shown in FIG. 9 may
also be used to remove volatiles and cure composite patches (not shown) used to rework an area of a part or structure. Referring to FIG. 9, the temperature of the part 22 indicated by plot 92 is continuously increased at a substantially constant rate from time ***t₀*** to ***t₂*** until the preselected cure temperature has been reached at ***t₂***. Beginning at ***t₀***, the vacuum pressures in the outer and inner vacuum chambers 32, 34, respectively represented by plots 94 and 96 are drawn to preselected levels, the first vacuum pressure 94 in the outer vacuum chamber 32 is slightly above
the vacuum pressure 96 in the inner chamber 34.

In this embodiment, the vacuum pressure 96 in the inner chamber 34 is maintained substantially constant during the entire process cycle. However, at some point, ***t₁*** between *t₀* and ***t₂,*** the vacuum pressure 94 in the outer vacuum chamber 32 is reduced to a level that is materially less than the vacuum pressure 96 in the inner vacuum chamber 34. During the period between ***t₀*** and ***t₁**,* because the two pressures 94, 96 are nearly equal, the vacuum pressure 94 in the outer vacuum chamber 32 prevents the inner bag 30 from applying full compaction pressure on the part 22, thereby allowing volatiles in the part 22 to escape more readily as the temperature 92 is being ramped up to the cure temperature. At time ***t₁**,* however, the reduction of the vacuum pressure 94 allows the vacuum pressure 96 in the inner chamber 34 to apply nearly full pressure to the part 22 in order to compact the part 22 and force out air pockets in the laminate part 22 to avoid porosities. The period between ***t₂*** and ***t₃*** represents the preselected period during which the temperature 92 is maintained at a constant cure temperature. Beginning at ***t₃,*** the temperature 92 is ramped down during a cooling cycle to an ambient temperature at ***t₄,*** at which point the vacuum pressures 94, 96 may be terminated.

FIG. 10 illustrates a cure processing schedule, not part of the claimed invention, which is
generally similar to FIG. 9 however ramping of the temperature 92 to the cure temperature, though continuous, is not constant, but rather includes one or more changes in the rate of temperature increase. In the illustrated example, the temperature 92 is increased between ***t₀*** and ***t₁*** at a rate that is greater than that shown in the schedule of FIG. 9. However, at ***t₁***, the rate of temperature increase is reduced until ***t₂*** at which point the temperature ramp rate is resumed until the cure temperature is reached at ***t₃***.

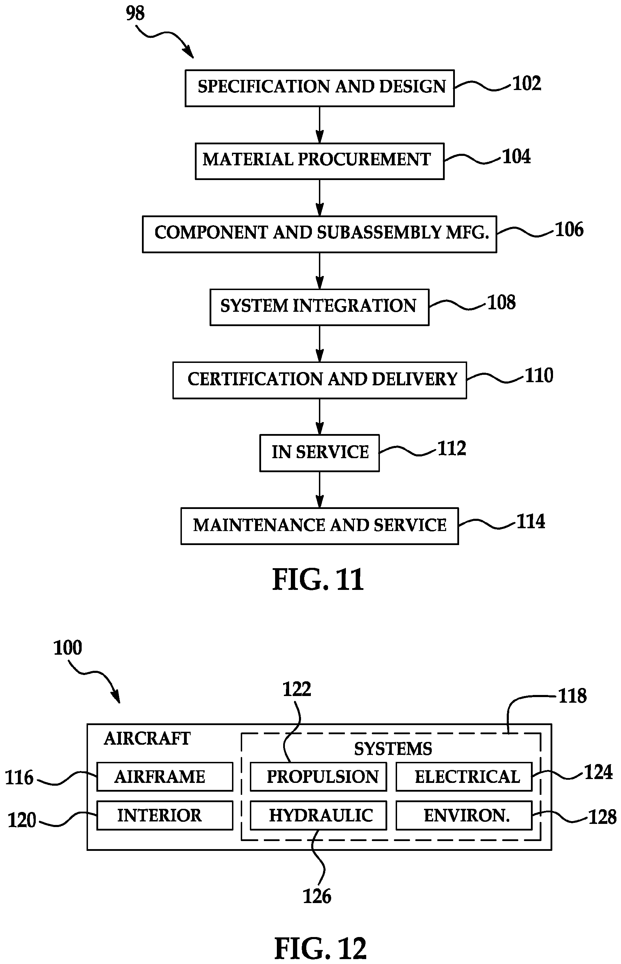

Embodiments of the disclosure may find use in a variety of potential applications, particularly in the transportation industry, including for example, aerospace, marine and automotive applications. Thus, referring now to FIGS. 11 and 12, embodiments of the disclosure may be used in the context of an aircraft manufacturing and service method 98 as shown in Figure 11 and an aircraft 100 as shown in Figure 12. During pre-production, exemplary method 98 may include specification and design 102 of the aircraft 100 and material procurement 104. During production, component and subassembly manufacturing 106 and system integration 108 of the aircraft 100 takes place. The disclosed methods and apparatus may be used to cure composite parts manufactured during step 106 and integrated in step 108. Thereafter, the aircraft 100 may go through certification and delivery 110 in order to be placed in service 112. While in service by a customer, the aircraft 100 is scheduled for routine maintenance and service 114 (which may also include modification, reconfiguration, refurbishment, and so on). The disclosed methods and apparatus may be used to cure composite parts that are installed on the aircraft 100 during the maintenance and service 114.

Each of the processes of method 98 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 12, the aircraft 100 produced by exemplary method 98 may include an airframe 116 with a plurality of systems 118 and an interior 120. Examples of high-level systems 118 include one or more of a propulsion system 122, an electrical system 124, a hydraulic system 126, and an environmental system 128. Any number of other systems may be included. Although an aerospace example is shown, the principles of the disclosure may be applied to other industries, such as the marine, automotive and construction industries.

The apparatus and methods embodied herein may be employed during any one or more of the stages of the production and service method 98. For example, components or subassemblies corresponding to production process 98 may be fabricated or manufactured in a manner similar to components or subassemblies produced while the aircraft 100 is in service. Also, one or more apparatus embodiments, method embodiments, or a combination thereof may be utilized during the production stages 106 and 108, for example, by substantially expediting assembly of or reducing the cost of an aircraft 100.

Similarly, one or more of apparatus embodiments, method embodiments, or a combination thereof may be utilized while the aircraft 100 is in service, for example and without limitation, to maintenance and service 114.

Although the embodiments of this disclosure have been described with respect to certain exemplary embodiments, it is to be understood that the specific embodiments are for purposes of illustration and not limitation, as other variations will occur to those of skill in the art.

## Claims

1. A method of curing a composite part, comprising:
placing the composite part (22) against a tool (24) having at least a first side (24a) and a second side opposite the first side (24a), the composite part placed against the first side;
drawing a first vacuum and a second vacuum over the composite part (22) in, correspondingly, a first vacuum area (34) in which the composite part is located and a second vacuum area (32) outside the first vacuum area wherein the vacuum j pressure (94) of the second vacuum is slightly above the vacuum pressure (96) of the first vacuum;
increasing a temperature of the composite part (22) by heating the tool and the composite part substantially continuously at a substantially constant rate
until the tool and the composite part reach a preselected cure temperature; and
before the temperature reaches a cure temperature of the composite part, reducing the vacuum pressure (94) of the second vacuum to a level that is materially less than the vacuum pressure of the first vacuum;
maintaining the temperature of the composite part substantially at the cure
temperature for a preselected period while maintaining the vacuum pressure of the first vacuum (96) substantially constant during the entire process cycle; and
reducing the temperature of the composite part after the cure temperature
has been maintained for the preselected period; terminating the vacuums in the first and second vacuum chambers; wherein drawing the first vacuum and the second vacuum includes:
placing a substantially flexible bag (30) over the composite part (22) to form the first vacuum area (34),
forming a substantially vacuum tight seal between the bag (30) and the tool (24), drawing air from the bag (30) through a first vacuum port (48) in the tool (24),
placing a substantially rigid shroud (28) over the bag and the composite part (22) to form the second vacuum area (32), and
drawing air from the shroud (28) through a second vacuum port (50) in the shroud (28); forming a vacuum tight seal between the bag (30) and the shroud (28).

2. The method of claim 1, further comprising:
holding a periphery of the bag (30) against the tool using a magnet.

3. A method of curing a composite part (22) as claimed in claim 1, comprising:
forming, on the first side, a first outer vacuum chamber (32) over the part by placing a shroud (28) over the part to define the first vacuum area;
forming, on the first side, a second inner vacuum chamber (34) over the part by placing a bag (30) over the composite part inside the shroud (28) to define the second vacuum area;
forming a first substantially vacuum tight seal between the shroud (28) and the bag (30); forming a second substantially vacuum tight seal between the bag (30) and the tool (24); wherein said first vacuum is drawn in the first vacuum chamber (32); and
wherein said second vacuum is drawn in the second vacuum chamber (34);

## Patentansprüche

1. Verfahren zum Härten eines Verbundteils, das beinhaltet:
Platzieren des Verbundteils (22) an einem Werkzeug (24), das wenigstens eine erste Seite (24a) und eine zweite Seite gegenüber der ersten Seite (24a) hat, wobei das Verbundteil an der ersten Seite platziert wird;
Ziehen eines ersten Vakuums und eines zweiten Vakuums über das Verbundteil (22) in, entsprechend, einem ersten Vakuumbereich (34), in dem sich das Verbundteil befindet, und einem zweiten Vakuumbereich (32) außerhalb des ersten Vakuumbereichs, wobei der Vakuumdruck (94) des zweiten Vakuums geringfügig über dem Vakuumdruck (96) des ersten Vakuums liegt;
Erhöhen der Temperatur des Verbundteils (22) durch Erhitzen des Werkzeugs und des Verbundteils im Wesentlichen kontinuierlich mit einer im Wesentlichen konstanten Rate, bis das Werkzeug und das Verbundteil eine vorgewählte Härtungstemperatur erreicht haben; und
bevor die Temperatur eine Härtungstemperatur des Verbundteils erreicht, Reduzieren des Vakuumdrucks (94) des zweiten Vakuums auf einen Pegel, der erheblich niedriger ist, als der Vakuumdruck des ersten Vakuums;
Halten der Temperatur des Verbundteils im Wesentlichen auf der Härtungstemperatur für einen vorgewählten Zeitraum, während der Vakuumdruck des ersten Vakuums (96) während des gesamten Prozesszyklus im Wesentlichen konstant gehalten wird; und
Reduzieren der Temperatur des Verbundteils, nachdem die Härtungstemperatur für den vorgewählten Zeitraum konstant gehalten worden ist;
Beenden der Vakuen in der ersten und zweiten Vakuumkammer;
wobei das Ziehen des ersten und des zweiten Vakuums beinhaltet:
Platzieren eines im Wesentlichen flexiblen Beutels (30) über dem Verbundteil (22), um den ersten Vakuumbereich (34) zu bilden;
Ausbilden einer im Wesentlichen vakuumdichten Dichtung zwischen dem Beutel (30) und dem Werkzeug (24),
Ziehen von Luft aus dem Beutel (30) durch eine erste Vakuumöffnung (48) in dem Werkzeug (24),
Platzieren einer im Wesentlichen starren Umhüllung (28) über dem Beutel und dem Verbundteil (22), um den zweiten Vakuumbereich (32) zu bilden, und
Ziehen von Luft aus der Umhüllung (28) durch eine zweite Vakuumöffnung (50) in der Umhüllung (28),
Ausbilden einer vakuumdichten Dichtung zwischen dem Beutel (30) und der Umhüllung (28).

2. Verfahren nach Anspruch 1, das des Weiteren beinhaltet:
Halten eines Umfangs des Beutels (30) an dem Werkzeug unter Verwendung eines Magneten.

3. Verfahren zum Härten eines Verbundteils (22) nach Anspruch 1, das beinhaltet:
Ausbilden, an der ersten Seite, einer ersten äußeren Vakuumkammer (32) über dem Teil durch Platzieren einer Umhüllung (28) über dem Teil, um den ersten Vakuumbereich zu definieren;
Ausbilden, an der ersten Seite, einer zweiten inneren Vakuumkammer (34) über dem Teil durch Platzieren eines Beutels (30) über dem Verbundteil im Inneren der Umhüllung (28), um den zweiten Vakuumbereich zu definieren;
Ausbilden einer ersten im Wesentlichen vakuumdichten Dichtung zwischen der Umhüllung (28) und dem Beutel (30);
Ausbilden einer zweiten im Wesentlichen vakuumdichten Dichtung zwischen dem Beutel (30) und dem Werkzeug (24);
wobei das erste Vakuum in der ersten Vakuumkammer (32) gezogen wird; und
wobei das zweite Vakuum in der zweiten Vakuumkammer (34) gezogen wird.

## Revendications

1. Procédé de traitement thermique d'une pièce composite, consistant à :
placer la pièce composite (22) contre un outil (24) ayant au moins un premier côté (24a) et un second côté opposé au premier côté (24a), la pièce composite étant placée contre le premier côté ;
faire circuler un premier vide et un second vide au-dessus de la pièce composite (22) dans une première zone vide (34) correspondante, dans laquelle est située la pièce composite et une seconde zone vide (32) en dehors de la première zone vide, la pression à vide (94) du second vide étant légèrement au-dessus de la pression à vide (96) du premier vide ;
augmenter une température de la pièce composite (22) en chauffant l'outil et la pièce composite de manière sensiblement continue à une vitesse sensiblement constante jusqu'à ce que l'outil et la pièce composite atteignent une température de traitement thermique présélectionnée ; et
avant que la température atteigne une température de traitement thermique de la pièce composite, diminuer la pression à vide (94) du second vide à un niveau qui est matériellement inférieur à la pression à vide du premier vide ;
maintenir la température de la pièce composite sensiblement à la température de traitement thermique pendant une durée présélectionnée tout en maintenant la pression à vide du premier vide (96) sensiblement constante pendant tout le cycle de traitement ; et
diminuer la température de la pièce composite après que la température de traitement thermique a été maintenue pendant la durée présélectionnée ;
terminer les vides dans les première et seconde chambres à vide ;
dans lequel l'étape consistant à faire circuler le premier vide et le second vide consiste à :
placer un sac sensiblement flexible (30) au-dessus de la pièce composite (22) pour former la première zone vide (34),
former un joint sensiblement étanche au vide entre le sac (30) et l'outil (24),
faire circuler l'air provenant du sac (30) à travers un premier orifice de vide (48) dans l'outil (24),
placer une enveloppe sensiblement rigide (28) au-dessus du sac et de la pièce composite (22) pour former la seconde zone vide (32), et
faire circuler l'air provenant de l'enveloppe (28) à travers un second orifice de vide (50) dans l'enveloppe (28) ;
former un joint étanche au vide entre le sac (30) et l'enveloppe (28).

2. Procédé selon la revendication 1, consistant en outre à :
retenir une périphérie du sac (30) contre l'outil en utilisant un aimant.

3. Procédé de traitement thermique d'une pièce composite (22) selon la revendication claim 1, consistant à :
former, sur le premier côté, une première chambre à vide extérieure (32) au-dessus de la pièce, en plaçant une enveloppe (28) au-dessus de la pièce pour définir la première zone vide ;
former, sur le premier côté, une seconde chambre à vide intérieure (34) au-dessus de la pièce, en plaçant un sac (30) au-dessus de la pièce composite à l'intérieur de l'enveloppe (28) pour définir la seconde zone à vide ;
former un premier joint sensiblement étanche au vide entre l'enveloppe (28) et le sac (30) ;
former un second joint sensiblement étanche au vide entre l'enveloppe ((30) et l'outil (24) ;
dans lequel ledit premier vide est mis en circulation dans la première chambre à vide (32) ; et
dans lequel ledit second vide est mis en circulation dans la dans la seconde chambre à vide (34).
